(19) Europäisches Patentamt / European Patent Office / Office européen des brevets

(11) **EP 4 031 850 B1**

(12) **EUROPEAN PATENT SPECIFICATION**

(45) Date of publication and mention
of the grant of the patent:
**06.08.2025   Bulletin 2025/32**

(21) Application number: **20775291.6**

(22) Date of filing: **18.09.2020**

(51) International Patent Classification (IPC):
*G01N 15/08* *(2006.01)*

(52) Cooperative Patent Classification (CPC):
**G01N 15/0826**

(86) International application number:
**PCT/EP2020/076186**

(87) International publication number:
**WO 2021/053193 (25.03.2021 Gazette 2021/12)**

(54) **METHOD FOR DETERMINING THE PERMEABILITY OF ARBITRARILY SHAPED MATERIALS**

VERFAHREN ZUR BESTIMMUNG DER PERMEABILITÄT VON WILLKÜRLICH GEFORMTEN MATERIALIEN

MÉTHODE POUR DÉTERMINER LA PERMÉABILITÉ DE MATÉRIAUX DE FORME ARBITRAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **19.09.2019   US 201962902410 P**

(43) Date of publication of application:
**27.07.2022   Bulletin 2022/30**

(73) Proprietor: **Univerza V Ljubljani**
**1000 Ljubljana (SI)**

(72) Inventor: **SITAR, Anze**
**1000 Ljubljana (SI)**

(74) Representative: **Zacco GmbH**
**Bayerstrasse 83**
**80335 München (DE)**

(56) References cited:
**US-A1- 2015 354 352**

EP 4 031 850 B1

**Description**

The present disclosure relates to an apparatus and a methodology for determining the properties of arbitrarily shaped materials.

Permeability is most commonly measured on rock samples, which are extracted from the ground and inserted in specifically designed holders of the permeability measuring apparatus U.S. Pat. No. 4,627,270; 5,261,267; 5,844,136; 9,291,541, 10,302,543. The permeability and porosity of rock samples is especially valuable information in acquiring oil and recently also in carbon dioxide deposition. The permeability of powder and granulate materials is generally determined with measuring the flow rate of gas at a constant pressure difference or with measuring the pressure drop at a constant flow rate of the gas passing through the particulate material. It is possible to measure permeability of sampled powder materials or even during a flow of the particulate materials in a suitable device U.S. Pat. No. 3,505,856. In addition to analyzing rock, granulates and powder materials, there are also extensive methods available for sheet materials: filters, cloths and membranes U.S. Pat. No. 5,591,898; 7,685,865; 8,117,899. However, none of the encountered and studied techniques or apparatuses are suitable for measuring arbitrarily shaped or non-extractable materials. Some of the methods in the prior art require additional parameters such as porosity and compressibility of the material U.S. Pat. No. 5,261,267 or even diffusion and solubility coefficient U.S. Pat. No. 5,591,898, which are often difficult to acquire.

The pharmaceutical process of freeze drying is carried out in industrial pharmaceutical production processes. The permeability is the most influential material property in the scope of lyophilization process, as the water vapor is required to permeate via sublimation through the material during the freeze drying process. The sublimation flow during drying is hindered by the materials flow resistance, therefore it is crucial to measure the product's permeability in order to evaluate and potentially improve the protocol of freeze drying. However, with the currently available technologies it is difficult to measure permeabilities of the freeze dried pharmaceuticals, as it is not possible to extract the fragile samples without the deterioration of the permeability. Consequentially, the researchers of the field are mostly relying on assessing two-dimensional porosity from scanning electron microscope images, which is costly and time consuming. In addition, the permeability is the property that directly affects the mass transfer through a material, whereas the porosity is one of the parameters with an effect on permeability. Therefore, measuring permeability instead of porosity is much more meaningful, if there is an interest in the mass flow resistance of a material.

It is an object of the present invention to provide an improved method for determining permeability of an arbitrary sample material.

The object is satisfied by a method in accordance with claim 1.

Preferred embodiments of the present invention are described in the dependent claims.

The step of determining the permeability of the sample material includes a comparison step using the permeabilities of two reference materials. Results for the reference materials can be obtained experimentally, in particular by using reference materials with known permeabilities at the same or similar initial and boundary conditions at which the permeability of the sample material is measured. The experimental results can be obtained from the entire pressure or mass/volumetric flow response during the permeation of the working fluid through the material. Alternatively, a comparison can be carried out based on a simulation which makes use of a physical model.

According to the invention, two reference materials, each with a known permeability, are provided, wherein the permeability of one reference material is higher and the permeability of the other reference material is lower than the permeability of the sample material, and wherein the permeability of the sample material is determined by an interpolation of experimental results obtained for the two reference materials, in particular under the same initial and boundary conditions.

In some embodiments, the chamber's sizes in fluid connection with the sample material is adjustable in size. This might allow for an adaptation of boundary conditions, which affect the resolution and accuracy of the measurements. The variating volumes of the chambers can be achieved also by using pistons for the variations in the volume of the chambers, which enables quick and accurate change of the volumes. For example, larger upstream chamber contains larger amount of the working fluid, which will dissipate through the sample material for a longer period of time and thus increase the integral result of the transient pressure and/or volumetric flow signal.

In some embodiments, pressure settings at the upstream and downstream end of the sample material can be varied, in particular using a vacuum pump and/or pressure reducing valves. This can be advantageous, as adjustable pressure boundary conditions can provide the possibility to replicate the boundary conditions of a process in interest. Similar as with variations of volumes, pressure variations can affect the resolution and accuracy of the measured result.

In some embodiments, a bypass connection is provided that bypasses the sample material in the container. Thus, a reversed flow is possible, for example to analyze possible differences of the permeability in relation to the sample material's orientation.

In some embodiments, a piston controlled pressure is applied in the upstream chamber, wherein the pressure is preferably periodical. A measured response downstream then can be periodical with a phase shift and a change in amplitude.

The final equilibrium pressure can be an indication of the material's porosity, and the rate of the pressure or mass/volumetric flow change can indicate the permeability.

In some embodiments, additional samples are connected fluidly in parallel or in series. This can enhances a measured response and improve the measurement accuracy.

In some embodiments, at least one further sensor, which is preferably not a pressure sensor, is provided, wherein, further preferably, the sensor is one of the following: a mass spectrometer, one or more infrared sensors. This can be useful, for example, if the permeating fluid has a very low flow or a distinction of gas species is required

In some embodiments, numerous consecutive measurements are carried out to compensate for any repeatability concerns.

In some embodiments, a mass spectrometer is provided, and wherein the mass spectrometer is connected to the outlet of the vacuum pump, wherein, optionally, a vacuum pump is provided.

This can ensure that no fluid is absorbed into the sample material or any other part of the apparatus.

In some embodiments, further comprising providing a derivation of the sample material's permeability from the coupled and normalized experimental results based on measured pressures, mass/volumetric flow, and temperatures at predefined initial and boundary conditions.

According to the invention, the sample material forms the container, and the sample material comprises an impermeable surface and inlet/outlet ports. The sample material's surface can be treated with an impermeable coating.

In some embodiments, the step of determining the permeability of the sample material includes carrying out an unsteady state measurement.

The present application also discloses an apparatus for measuring the permeability of a working fluid through a sample material, wherein the apparatus is configured to carry out the steps of a method in accordance with the present invention.

In some embodiments, the apparatus comprises at least one component for controlling and measuring at least one of the following: initial and boundary conditions, pressures, temperatures, mass flows, and volumetric flows.

At least in some embodiments of the present invention, it is relied on measuring the intrinsic permeability of any material of interest, as in some embodiments a measurement method is provided, which is capable of measuring permeabilities of non-extractable materials. Moreover, the experimental setup can be capable of monitoring as well as controlling the operating conditions to fully imitate the conditions of the freeze drying process. In addition, the comparative analysis can allow performing measurements of arbitrarily shaped, non-extractable, high or low permeability materials without any additional thermodynamic properties required. At least some embodiments in accordance with the present invention surpass most of drawbacks of the currently available methods and techniques that could be employed to determine the rate of permeability of non-extractable and arbitrary shaped materials.

In some embodiments, a method for a measurement of the rate of permeability of sample materials with an arbitrary shape and size is provided. In some embodiments, an apparatus for a measurement of the rate of permeability of sample materials with an arbitrary shape and size is provided. The working fluid can be liquid, gas or even vapor, if such experimental conditions are preferred. Some embodiments can facilitate a well-controlled initial and boundary experimental conditions at which the working fluid is permeating through the sample material. An advantage of some embodiments of the present invention is the possibility to make experimental measurements of non-extractable materials, as well as the adaptable design of some embodiments of the apparatus to measure permeabilities of arbitrarily shaped sample materials at steady or unsteady state experimental conditions.

One of the key advantages of some embodiments of the present invention is the adaptability of the apparatus as well as the sample material. For example, the measured response can be tailored with the addition of a larger number of identical samples connected in series or in parallel. The result of a parallel connection of samples is an overall smaller response, which enables measuring materials with high permeabilities; whereas the in series connection increases the measured response due to the overall higher permeability of the samples compared to only one sample. The implementation of in series and parallel connection of additional samples is reasonable, when the permeability of the samples is too low or too high for the measurement setup, respectively.

Concerning steady state measurements of permeability: Such steady state measurements may require a sufficient amount of the working fluid in the pressurized supply chamber or a liquid reservoir to assure an uninterrupted constant flow of the working fluid during the experiment. Moreover, the outlet chamber or the surroundings chamber may be properly sized to mitigate the constant flow of the working fluid without any hindering or non-negligible pressure rise at the outlet port of the sample material. After the connecting valves are open to allow the permeating flow to dissipate through the sample material and a steady state is reached, the measured pressure difference across the sample material at a constant flow through the material is corresponding to the rate of permeability of the sample material. The constant flow rate and the measured pressure difference can be replaced by measuring the flow rate at a constant pressure difference across the sample material.

Concerning unsteady state measurements of permeability: Such unsteady state measurements of permeability may commence with filling the upstream chamber with a known amount of the working fluid by opening the valve fluidly connecting the upstream and the supply chamber. After the desired amount of the working fluid in the upstream chamber is attained, all the regulated valves and vents are closed except the outlet vent at the outlet chamber. The next step involves simultaneously measuring the relevant quantities (pressures, temperatures, mass or volumetric flow) and opening the valve fluidly connecting the upstream chamber with the inlet chamber, thus inducing a pressure difference across the sample material. The measured pressure difference between the inlet and the outlet chamber is directly dependent on the permeating fluid flow through the sample and therefore also on the sample material's permeability. The analysis of the experimental results can rely on physical modelling, whilst using comparative analysis may be advantageous due to its simplicity and straightforward results. The comparative analysis implies that reference materials with known permeabilities are used in measurements at similar experimental conditions to enable the calculation of the permeability for any sample material of interest.

The measured response can be the pressure signals, the mass/volumetric flow signals or the combination of the above. Additional measurement sensors can be incorporated to monitor and regulate the initial and boundary conditions according to the desired values. If the measurement conditions require low pressures or removal of any remaining fluid from the experimental setup, the vacuum pump can be employed to achieve these tasks.

Some advantages of embodiments of the present invention are: wide range of suitable sample materials regarding their shape, size and substance; adaptability to a variety of operating conditions, methods of measurement and working fluids; possibility of straightforward determination of the permeating rate with employing comparative analysis or employing a physical method; an inexpensive and quick method, when employing the unsteady state measurement.

In some embodiments, an apparatus or a method of operation is provided for determination of the permeability of arbitrarily shaped materials which are difficult or non-extractable from their original location without deterioration of their structural or other properties. In some embodiments, a non-destructive and non-invasive method is provided which allows performing steady or unsteady state measurements also on brittle and fragile sample materials. A fluid supply chamber is fluidly connected to the sample material through valves and chambers. At the commencement of the measurement the fluid flow is allowed to dissipate through the material. The fluid rate of permeation through the material can be derived from the measured pressure difference or mass/volumetric fluid flow across the porous material after the connecting valve is opened. Hence, a manometric or volumetric method of determination of the working fluid transmission rate can be applied. In some embodiments, a physical model of permeation is applicable to the experimental results, however an integral comparative method of analysis for estimation of the permeability can be applied, due to its simplicity, accuracy and small amount of time required. An advantage of an apparatus in accordance with some embodiments of the invention can be that it provides the possibility of measuring arbitrarily shaped samples without additional preparation of the sample material or supplementary thermodynamic properties required in the post-measurement analysis.

The present disclosure in particular relates to an apparatus and a methodology for determining the properties of arbitrarily shaped materials: (i) conveniently formed in sheets or discs (for example: papers, filters, cloths, membranes, rock samples), (ii) samples with connection ports (for example: filter cartridges, valves), (iii) irregularly shaped samples (for example: artificial bones, fruits, 3D printed materials), and (iv) non-extractable materials without deterioration (for example: lyophilized products). In addition, the sample material can be made of an arbitrary material (metal, polymer, organic and inorganic materials, biologic materials, a combination of materials, etc.). The presented method and apparatus offer a determination of permeability, which is often required for irregularly shaped samples and a necessity for non-extractable sample materials. In addition, the measuring apparatus is flexible and can be adapted for: (i) unsteady state measurements, (ii) steady state measurement, (iii) measurements at specific boundary conditions, which are expected during the process of interest (for example: permeation of water vapor at specific upstream or downstream pressure), (iv) measurements with various working fluids, (v) measurements of arbitrary materials in various forms. The knowledge of the permeability is important in many applications where the fluid flow resistance presents an influential parameter. For example, the strength and permeability of artificial bones are two of the most crucial parameters of the artificially produced material. Another example is freeze-dried products, as their flow resistance has a large impact on the drying process during the lyophilization.

The invention is further described by way of example only and with reference to the accompanying drawings, which show:

FIG. 1 is a schematic diagram showing an embodiment of an experimental apparatus in accordance with the present invention.

FIG. 2 is depicting schematically a reference non-extractable material in a closed container and 19 alterations of the container.

FIG. 3 is presenting schematically an arbitrarily shaped sample material with an inlet and an outlet.

FIG. 4 is an illustrative plot of the normalized unsteady pressure differences across the sample material and normalized unsteady pressure in the upstream chamber.

FIG. 5 is a graph of normalized unsteady pressure differences across three materials with different permeabilities at a limited amount of the fluid flow.

FIG. 6 is a graph of the initial stabilization of the normalized unsteady pressure differences across three materials with different permeabilities at a continuous fluid flow, which results in a steady state.

The physical modelling of the permeating flow through the sample material depends on the flow regime of the working fluid, which is most often based on the Knudsen number. Therefore, the governing equations depend on the Knudsen number defined as

$$Kn = \frac{\lambda_{path}}{d_{pore}}.$$ (1)

The Knudsen number is defined with the molecular mean free path $\lambda_{path}$ and an average pore diameter in the sample material $d_{pore}$. Most of the researchers agree that the flow regimes are arranged as: viscous flow at $Kn \leq 0.001$, slip flow at $0.001 < Kn < 0.1$, transition flow at $0.1 < Kn < 10$, and Knudsen flow at $Kn \geq 10$. The modelling of the flow is highly affected by the flow regime and the calculations must take the Knudsen number into account. The permeability of a material $\kappa$ is the measure of its ability to allow fluid flow through the material. In Darcy flow regime it is defined as

$$\kappa = -\frac{\mu \, dV/dt}{A \, dp/dx} = -\frac{\nu \, dm/dt}{A \, dp/dx}.$$ (2)

Experimental results can be tailored by preparing samples with different permeabilities $\kappa$, area $A$ or thickness $dx$, or alternatively using a fluid with a different dynamic viscosity $\mu$ or kinematic viscosity $\nu$. The measured quantities are the mass flow $dm/dt$ (volumetric flow $dV/dt$) or the pressure response $dpdt$, whereas the sample thickness $dx$ is usually a constant. The material mass transfer resistance $R$ is defined as

$$R = \frac{dp}{dV/dt} = -\frac{\mu \, dx}{\kappa A}$$ (3)

and is therefore proportional to the inverse value of the permeability. The definitions of permeability along with gas transmission rate and permeance are different in standards ASRM D1434-82, ISO 2556:2001, ISO 15105-2:2003. Although the definitions differ in details, they are still similar regarding the essence of the quantity of interest. The presented method and apparatus allows an arbitrary setting of the temperatures, pressure difference and fluid flowing through the sample material, and is therefore extremely suitable to establish the permeability, gas transmission rate or permeance of interest. The working conditions can be fitted to the actual conditions during the process of interest, and the experimental results will reveal the permeability relevant for that process. The employment of the actual boundary conditions during permeability measurements makes the flow regime effect irrelevant if the comparative analysis is employed, as the experimental results demonstrate the most important parameter - the actual permeability, which will have an effect on the process.

At least some embodiments of a method in accordance with the present invention, which are related to permeability determination, are based on a thorough understanding of the measurement equipment and experimental setup, as the measurement results depend directly on several experimental factors: volumes of the chambers, fluid pathway diameters, rigidness of the tubing and chambers, response times of the sensors and valves, etc. Therefore, a calibration procedure can be carried out using the actual experimental setup and experimental conditions on reference materials with known permeation properties.

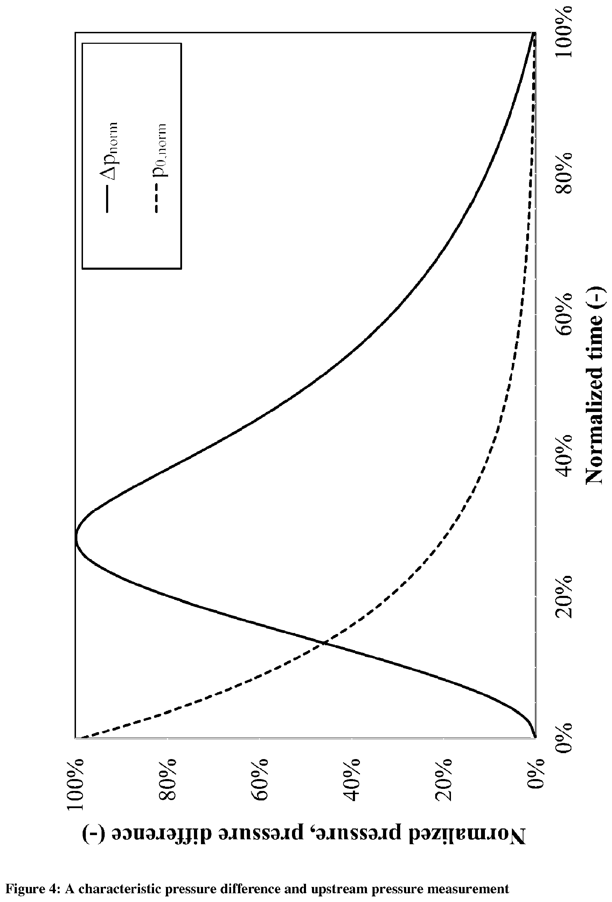

At least some embodiments, which are related to a comparative method, require measurements of two reference materials with known permeabilities and a measurement of a sample material with the permeability in between the permeabilities of the reference materials. Membranes with known permeabilities and dimensions as well as foils with fabricated through hole(s) can be employed as reference materials. Moreover, membranes and foils can be added to the sample material inlet or outlet and the reference flow resistance can be afterwards subtracted from the measured combined result, if additional measurement is performed on the sample material only. The comparative method is more accurate if the reference materials' permeabilities are as close to the sample material's permeability as possible. The initial and boundary conditions should be the same during the measurements of the sample and reference materials. There is no requirement for a thorough knowledge of the process and physics. Namely, the comparative method relies on the comparison of the sample material measurement and at least two measurements of reference materials with known permeabilities. Afterwards, a linear interpolation or any other method of interpolation can be used to determine the permeability of the sample material. A characteristic pressure response during an unsteady state measurement is presented in Figure 4, with the normalized upstream chamber pressure denoted with $p_{0,norm}$. The normalized pressure difference between the inlet and the outlet of the sample material is $\Delta p_{norm}$, which is calculated as

$$\Delta p_{norm} = \left( p_{in} - p_{out} \right)_{norm}. \qquad (4)$$

The normalization of the measured quantities: pressure or fluid flow and time is performed with the equation

$$x_{norm} = \frac{x - x_{min}}{x_{max} - x_{min}}, \qquad (5)$$

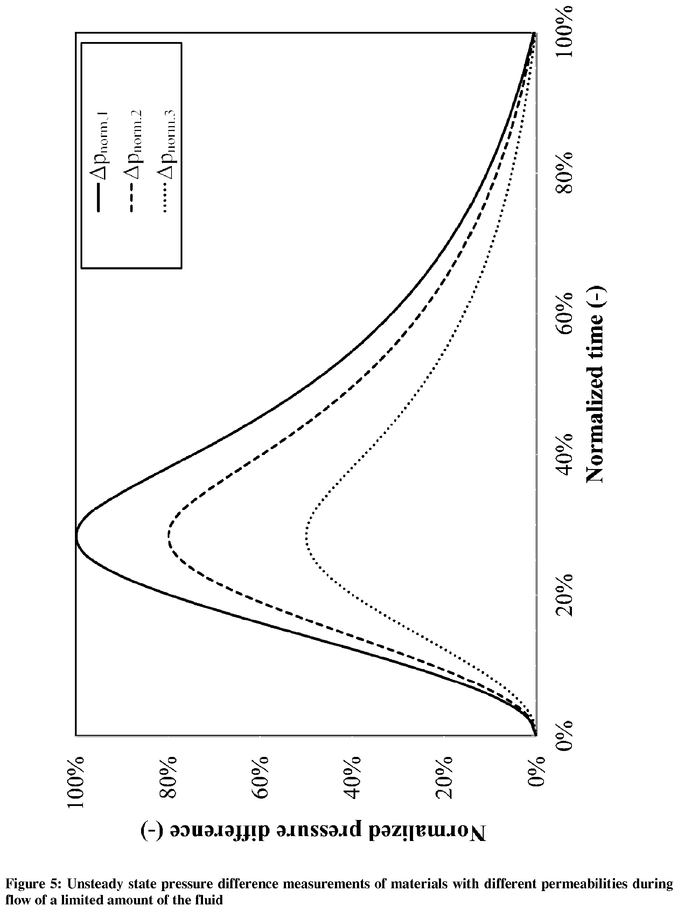

in which the measured value is $x$, the normalized value is $x_{norm}$, the maximum measured value of interest is $x_{max}$, and the minimum measured value of interest is $x_{min}$. Figure 5 shows three measurements of materials with different permeabilities. The measured $\Delta p_{norm,2}$ is the pressure response of the sample material, whereas $\Delta p_{norm,1}$ and $\Delta p_{norm,3}$ are the pressure responses of the two reference materials with known permeabilities at the same experimental conditions. If the dimensions of the sample material and the two reference materials are the same, the comparison of the measured responses is directly proportional to the permeability. Therefore, permeability of the sample material can be afterwards linearly interpolated from the measured response with the equation

$$\kappa_2 = \frac{A_2 - A_3}{A_1 - A_3} \left( \kappa_1 - \kappa_3 \right) + \kappa_3, \qquad (6)$$

in which the parameters $A_1$, $A_2$ and $A_3$ are the areas under the measurement curves $\Delta p_{norm,1}$, $\Delta p_{norm,2}$ and $\Delta p_{norm,3}$ in the $\Delta p(t)$ diagram in Figure 5, respectively. As it can be difficult to measure the pressure difference exactly at the sample material, if it is non-extractable or arbitrary shaped, all of the influential parameters might be taken into account. However, in the comparative method the exact values of the influential parameters are not crucial, as long as the measurements of the reference materials are made at the same initial and boundary conditions. Nonetheless, the accuracy of the permeability derivation depends on the similarity of the reference material with the sample material. Therefore, best results would be achieved with as similar reference materials as possible and as similar experimental conditions as possible.

The derivation of the permeability of a sample material could originate also from the volumetric method, therefore from measuring the volumetric or mass flow, as the permeability of the material affects the rate of the permeating fluid flow and is therefore an indication of the material's permeability. The calculation would be similar as described above, only the unsteady pressure difference would be replaced with unsteady mass/volumetric flow measurement.

The physical model for permeability determination can be based on a physical modelling of a permeating fluid flow which is based on the conservation law, which is in the most general form defined with the continuity equation

$$\frac{\partial (\varepsilon \rho)}{\partial t} + \nabla \cdot \left( \rho v \right) = \pm \, s, \qquad (7)$$

in which $\rho$ is density, $\varepsilon$ is the porosity, $t$ is time, $\nabla$ is the divergence operator, $v$ is the velocity vector, and $s$ is the working fluid sorption or desorption in the material. Afterwards, the possible simplification and reasonable assumptions are employed to enable a simplified method of solution. Some of the valid assumptions are: incompressible fluid, which results in a constant density; absence of sorption and desorption of the fluid in the material, which affects additional source or sink of the working fluid; transition to two-dimensional or one-dimensional problem simplifies the calculation; flow regime ranging from Darcy flow to Knudsen flow; isothermal conditions, which result in a constant viscosity, porosity and permeability; ideal gas assumption, which simplifies the calculation; etc. Conservation of mass in one dimension with no initial fluid in the sample, absence of sorption or desorption of the fluid within the sample in combination with the Darcy's law yields

$$\frac{\partial(\varepsilon\rho)}{\partial t} = \frac{\partial}{\partial x}\left(\rho\frac{\kappa}{\mu}\frac{\partial p}{\partial x}\right).\qquad(8)$$

By using additional simplifications and assumptions we are able to derive expression solvable without using any numerical methods. Otherwise the use of numerical methods is necessary for solving the permeability during an unsteady state flow.

A comprehensive knowledge of the fluid flow, experimental process and setup is needed to provide solid conclusions regarding the permeability from a single measurement of a sample material, which is often a difficult task. However, with a well-conceived physical model there are no additional reference materials and measurements needed. The permeating fluid flow regime has an important role in the measured results, therefore the Knudsen number and the governing equations must be determined. After the Knudsen number calculations reveal whether a viscous flow, slip flow, transition flow or Knudsen flow regime is occurring, the appropriate flow model and governing equations can be used with the experimental boundary conditions.

A further step, which may be the final step, is the incorporation of the experimental results into the model, as the fluid permeability rate through the sample material can be derived directly from the unsteady pressure difference

$$\Delta p(t) = p_{in}(t) - p_{out}(t)\qquad(9)$$

or from unsteady mass or volumetric flow Q

$$Q(t) = \frac{dV}{dt}(t).\qquad(10)$$

However, there are several parameters which can have an additional effect on the measured pressure or mass/volumetric flow difference and should be considered in the physical model calculations. Firstly, the volumes of the chambers and connecting tubes have various effects: upstream chamber with a volume of $V_0$ and the connecting tubes affect the amount of gas, which will flow through the sample material; inlet chamber with a volume $V_{in}$ and the nearby tubing act as a buffer volume and reduce the measured response in pressure or mass/volumetric flow difference; and the outlet chamber with a volume $V_{out}$ and the nearby tubing is adding additional flow resistance, which is again hindering the measured responses. Secondly, the temperatures of the: surroundings $T_{sur}$, upstream fluid temperature $T_0$, inlet and outlet fluid temperature $T_{in}$ and $T_{out}$, sample material temperature $T_{sample}$ have an effect on the densities and viscosities of the fluid, which inevitably affect also the measured pressure or mass/volumetric flow difference. It is reasonable to assume that the sample material is at the same temperature as the surroundings, as the sample is in the majority of cases inserted in the experimental setup for a longer period of time and therefore thermally stabilized. Otherwise, it would be necessary to additionally measure the temperature of the sample material as well. Thirdly, the absolute pressures of the upstream chamber $p_0$ and the initial absolute pressure at both ends of the sample material $p_{in}(t=0)$ and $p_{our}(t=0)$ have an effect on the permeating flow, which should be considered in the physical model. Fourthly, the size and the rigidness of the tubing incorporated in the experimental setup also affects the measured manometric or volumetric response, as smaller and flexible tubes hinder the fluid flow and act as a buffer, respectively. Fifthly, the valves response time and design along with the measurement frequencies and uncertainties also impact the experimental results and should be taken into account. All of the above parameters and experimental conditions must be taken into account, if their influence is not negligible and therefore have an effect on the governing laws and the experimental results. Other design parameters (chamber rigidness, electrical wire length, impurities in the fluid, moisture in the fluid) could also become relevant at particular experimental boundary conditions. Therefore, the comparative model method is the preferred choice of determining fluid permeability rate due to its simplicity, as long as the reference materials are available for comparison.

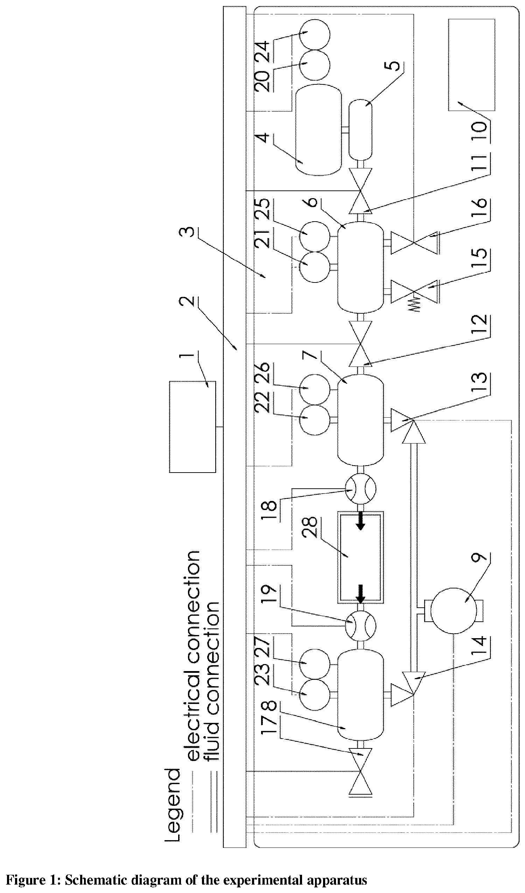

The fluid permeability rate measurement techniques can be commonly divided into steady-state and unsteady state methods, which are both direct methods of determining the permeability. At least some embodiments in accordance with the invention are adaptable to perform steady and unsteady measurements with minor adjustments in the experimental setup presented in Figure 1. The primary measured quantity is pressure in the manometric method or mass/volumetric flow in the volumetric method of operation. The experimental results and the experimental conditions can be afterwards analyzed to obtain the fluid permeability rate.

An exemplary full experimental setup presented in Figure 1 comprises: a computer for measurement analysis and process control 1, a data acquisition and control unit 2, a surroundings chamber 3, a supply chamber 4, a desiccant chamber 5, an upstream chamber 6, an inlet chamber 7, an outlet chamber 8, a vacuum pump 9, a HVAC system for the surroundings chamber 10, valves 11-14, a safety valve 15, vents 16-17, an inlet flow meter 18, an outlet flow meter 19, pressure sensors 20-23, temperature sensors 24-27, and a sample material 28. All of the containers, chambers and tubing can be made of impermeable materials.

The volumes as well as the rigidness of the included chambers and sample container are an experimental parameter as they have an effect on the measured quantities, thus they might be taken into account. The volumes of the lines can be important in the scope of the experimental results. Ideally the tubes should have a minimum volume, maximum cross-section and rigidity, which is in contradiction to some degree. The fluid flow should be hindered as little as possible, which is achieved with a small pressure drop of the tubes. The tubing presents a dead volume, which acts as a buffer and could suppress the experimental response. Flexible tubing is not recommended due to its inclination towards variations in volumes at different pressures. Therefore, the selection of the tubing is a compromise between the large cross-section and small volume of the tubes.

The incorporated valves have operating characteristics (valve flow coefficient, resistance coefficient, response time...), which are especially important during the unsteady state measurements. The selection of the installed valves and vents should be made in accordance with the expected operating conditions.

Also, the pressure sensors and the flow meters should be placed as close to the sample material as possible in order to acquire the experimental results, which are minimally affected by the inevitable dead volumes. In addition, the pressure sensors response time, repeatability, accuracy and the measuring system uncertainty all have an effect on the outcome of the measurements. Therefore, the selection of the pressure sensor and the data acquisition unit should be done carefully. Similar but to a lesser extend is valid also for the temperature sensors.

The possibility of measuring at steady states can be dependent on applying and maintaining a constant pressure difference across the sample material and measuring the steady state mass/volumetric flow of the permeating fluid. Similarly, steady state measurement can also be achieved by applying a constant mass/volumetric fluid flow and measuring the steady state pressure difference between both ends of the sample material. Both measuring variants can be performed with the proposed apparatus. The analysis of the experimental results can rely on physical modelling or on comparison analysis with reference materials.

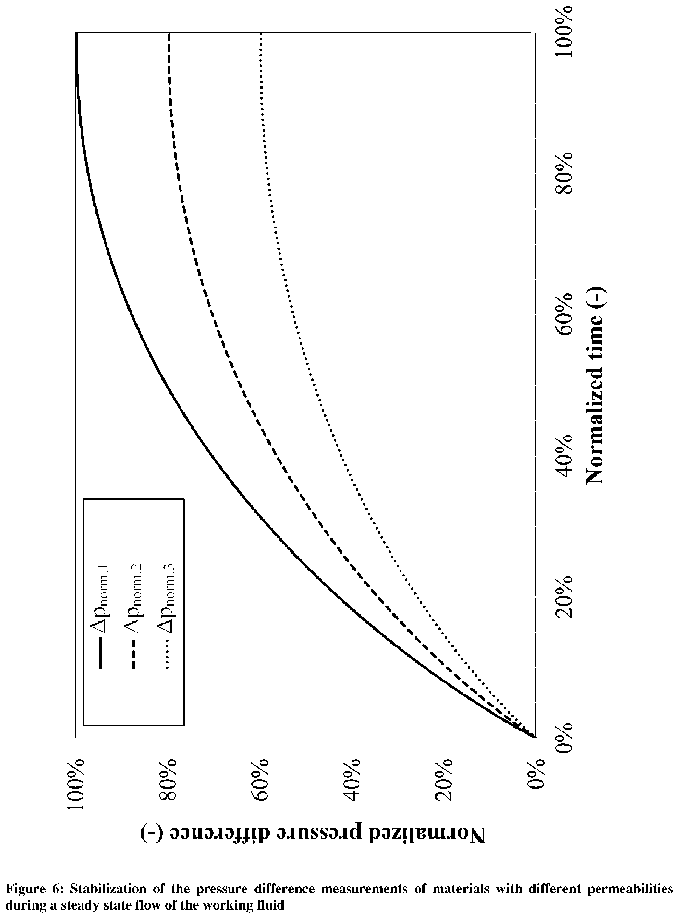

The experimental measurement can be controlled, monitored and recorded with a data acquisition and control unit 2 and a computer 1. The experimental procedure of the steady state measurements would commence by providing the upstream chamber 6 a working fluid, which flows from a supply chamber 4, which can be filled with gas or liquid. The vent 16 is connected to the upstream chamber 6 to enable precise pressure control monitored with the pressure sensor 21. The safety valve 15 is also fluidly connected to the upstream chamber 6 to protect the experimental equipment, if a high pressure inadvertently occurs in the upstream chamber 6. The valve 11 connecting supply chamber 4 and upstream chamber 6 should be a pressure reducing valve for ensuring a constant pressure in the upstream chamber 6 during the steady state measurements. If a constant mass/volumetric flow is required, the valve 12 can be controlled or a pump can be installed to ensure a constant flow of the working liquid. Afterwards the valve 12 connecting the upstream chamber 6 and inlet chamber 7 is opened, thus the sample material 28 is exposed to the permeating fluid. The outlet chamber 8 is also fluidly connected to the sample material container 28 and the surroundings chamber 3 with a vent 17. The valves 11, 12 and/or pumps connecting the inlet chamber 7 and the outlet chamber 8 with the upstream chamber 6 and the surroundings chamber 3 are controlled to achieve a steady state at a certain pressure and fluid flow conditions. After steady state is achieved the pressure and mass/volumetric flow measurements are performed with the pressure sensors 22, 23 and the flow meters 18, 19. The experimental initial and boundary conditions are controlled with the HVAC system 10 and the components of the experimental setup, and measured with the pressure sensors 20, 21 and the temperature sensors 24-27. The entire process of achieving a steady state pressure difference at a constant mass/volumetric flow is presented in Figure 6 for three test samples with different permeabilities. The connecting valves 11, 12 are opened at normalized time 0 %, whereas the steady state is achieved at normalized time 100 %. Similar results would be gained with measuring the mass/volumetric flow at a constant pressure difference across the test sample material 28.

The inlet flow meter 18 and outlet flow meter 19 are used to determine possible absorption or desorption of the working fluid in the sample material 28. If the material is certainly not absorbing or desorbing the working fluid, one of the flow meters 18 or 19 can be omitted.

There are also valves 13, 14 and a vacuum pump 9 included in the experimental setup, if the experimental conditions require low pressures and/or removing gas from the chambers 6-8, sample material or tubing. Additionally, a desiccant chamber 5 can also potentially be incorporated to eliminate undesired components from the working fluid in the supply chamber 4.

At least some embodiments in accordance with the present invention are suitable for unsteady state measurements. Some embodiments of a method in accordance with the invention include all of the pressure or fluid flow response in the analysis of the sample's permeability. The entire pressure difference across the sample material is composed from an initial signal rise as soon as the sample material is exposed to the higher pressure at one surface and the subsequent signal decline during the pressure decay, which ends after the fluid flow becomes negligibly small. The analysis of the experimental results yields material's resistivity to the flow of the working fluid and also permeability, if the dimensions of the sample as well as the working fluid dynamic viscosity are known.

The unsteady state measurement can be initiated by closing all the valves 11-14 and vents 16-17. If the sample material 28 and/or any other experimental equipment in contact with the working fluid are prone to absorption, the vacuum pump 9 and the appropriate valves 11-14 can be used to eliminate any potential residues of the working fluid or surrounding gas from the experimental setup. Afterwards, the valve 11 between the supply chamber 4 and the upstream chamber 6 is opened to provide the required amount of the working fluid in the upstream chamber 6, which can be monitored with the pressure sensor 21 in the upstream chamber 21 with the volume $V_0$. The aforementioned and opened valve 11 and the vent 16 can be controlled to achieve the required pressure $p_0$ in the upstream chamber 6 and afterwards both the valve 11 and the vent 16 would be closed. The next step can be to start monitoring the inlet pressure sensor 22 denoted with $p_{in}$ and the outlet pressure sensor 23 denoted with $p_{out}$ at the inlet chamber 7 and the outlet chamber 8 connected to the sample material, respectively. At this moment all of the valves 11-14 and the vents 16-17 are closed. Afterwards the valve 12 connecting the upstream chamber 6 and the inlet chamber 7 as well as the vent 17 at the outlet chamber 8 can be opened to allow the flow of the working fluid to permeate through the sample material 28. The measured pressure difference between the inlet chamber 7 and outlet chamber 8 $\Delta p = p_{in} - p_{out}$ is the quantity directly dependent on the permeability of the sample material 28 and the initial and boundary conditions of the measurement. Therefore, if the initial and boundary conditions are known and kept constant, the comparative analysis of permeabilities can be based solely on the measured pressure differences across sample and reference materials 28.

The described procedure is just one of the possibilities, whereas others would also include the use of the flow meters 18-19, the HVAC system 10, pressure sensor 20, temperature sensors 24-27, safety valve 15, desiccant chamber 5, etc. Similarly, some of the components included in the experimental apparatus presented in Figure 1, can be omitted, if their presence does not significantly contribute to determining the permeability in the range of the operating conditions of interest. The experimental procedure and the experimental apparatus itself should be optimized for the sample material 28 of interest to produce the best experimental results.

The normalized pressure difference $\Delta p_{norm}$ across the sample material 28 is presented in Figure 4 along with the normalized pressure decline in the upstream chamber 6 $p_{0,norm}$. This method incorporates the entire usable measured signal, which differs in accordance with the material's permeability and the initial and boundary conditions. The measured quantity is pressure and/or fluid flow. Moreover, the measured quantities can be tailored by increasing or decreasing the upstream chamber volume, thus prolonging or shortening the process of permeation, respectively. Similar effect is achievable by increasing or decreasing the pressure in the upstream chamber.

The presented method surpasses the existing state of the art, as it analyses the entire signal available from both influential quantities (pressure and flow), whereas the pulse decay method and other unsteady state methods use only the decreasing pressure signal or similar. Moreover, the apparatus and the method can be tailored for employing the pulse decay method or to analyze only the pressure rise or even the oscillating pressure method, if this would result in an improved experimental result.

The experimental setup in Figure 1 can be simplified with an exclusion of certain components (HVAC system, vacuum pump, temperature sensors, flow meters or pressure sensors...), however the experiments could be more restricted in the scope of initial and boundary conditions and the experimental results could also be more prone to higher measurement uncertainties and lower reliability.

The experimental setup presented in Figure 1 is comprised of: a computer for measurement analysis and process control 1, a data acquisition and control unit 2, a surroundings chamber 3, a supply chamber 4, a desiccant chamber 5, an upstream chamber 6, an inlet chamber 7, an outlet chamber 8, a vacuum pump 9, a HVAC system for the surroundings chamber 10, valves 11-14, a safety valve 15, vents 16-17, an inlet flow meter 18, an outlet flow meter 19, pressure sensors 20-23, temperature sensors 24-27, and the sample material 28. The data acquisition and control unit 2 as well as the computer 1 are incorporated for: (i) measuring temperatures 24-27, pressures 20-23, fluid flow 18-19 and operating signals from the valves 11-14 and vents 16-17, vacuum pump 9 and the HVAC system 10; (ii) controlling the valves 11-14 and vents 16-17, vacuum pump 9 and the HVAC system 10; and (iii) analysis of the measured experimental results. The surroundings chamber 3 and the HVAC system 10 are employed to ensure controlled boundary conditions during the experimental work, which is measured with a pressure sensor 20 and a temperature/humidity sensor 24. Usually, the purpose of the HVAC system 3 and the surroundings chamber 10 is substituted with the existent laboratory facilities and the building's HVAC system. The supply chamber 4 contains the working fluid for the measurements, and is fluidly connected to a desiccant chamber 5, if needed. The supply chamber 4 can contain any pressurized gas or liquid, and can also be substituted with a non-pressurized liquid and a pump. The upstream chamber 6 is fluidly connected to the supply chamber 4 through a control valve 11 to establish a precise pressure in the upstream chamber 6, which is measured with a pressure sensor 21, whereas the temperature is monitored with a temperature sensor 25. An additional control vent 16 is added for depressurization to the desired pressure, if the control valve 11 is not able to solely provide the desired pressure in the upstream chamber 6. A safety valve 15 is fluidly connected to the upstream chamber 5 to prevent damage to all of the experimental equipment in the downstream direction. The inlet chamber 7 is fluidly connected to the upstream chamber 6 through a control valve 12, which opens after the desired pressure in the upstream chamber 6 is achieved. During unsteady state measurement the valves 11-15 and vents 16 must be in closed state at the moment the control valve 12 opens. The pressure sensor 22 and the temperature sensor 26 are connected to the inlet chamber 7, as well as the control valve 13, through which the inlet chamber 7 and the vacuum pump 9 are fluidly connected. The sample material 28 is fluidly connected to the inlet chamber 7 and the outlet chamber 8 through the inlet flow meter 18 and the outlet flow meter 19, respectively. The outlet chamber 8 is fluidly connected to the vent 17 to allow degassing after a performed measurement. Additionally, the outlet chamber 8 is fluidly connected to a vacuum pump 9 through the control valve 14. The pressure sensor 23 and the temperature sensor 27 are also connected to the outlet chamber 8.

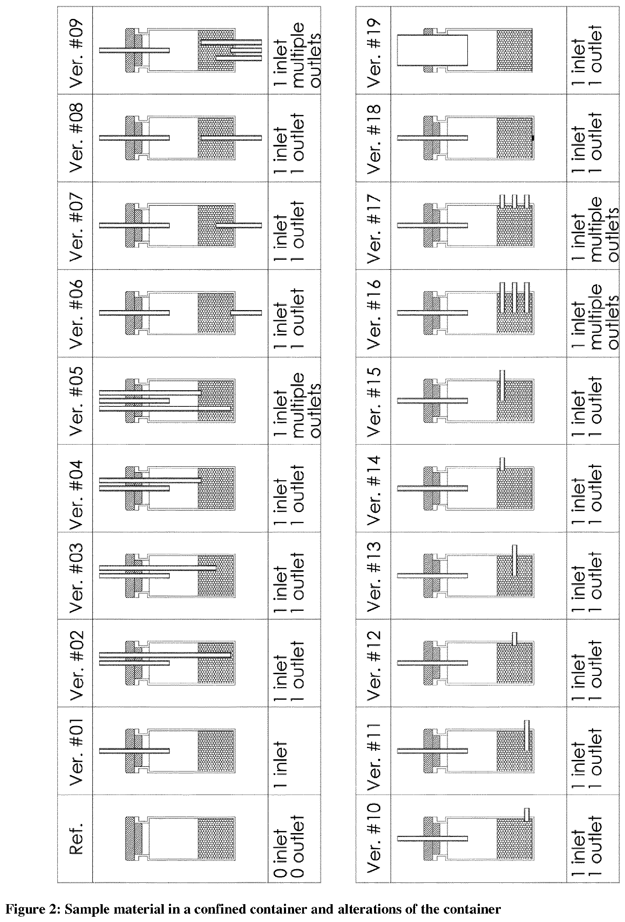

The original confined container with the sample material and some of the possible variations of the container are presented in Figure 2. In the presented reference version, the material is enclosed in a vial with a stopper on top, which is not suitable for permeability measurements, as it requires at least one opening port. All the other presented container versions 01-19, given in Figure 5, are suitable for measuring the permeability of the sample material. The differences between the presented versions are: (i) number of inlets and outlets; (ii) locations of the opening ports, which affect the measured material thickness and position; (iii) length and cross section of the inserted tubes or openings. There are numerous possible versions of the container with varying the number, size, length, etc. of the opening ports, as well as the container and sample material dimensions and proportions. Inserting a tube to a specific location in the sample material allows the measurement of the fluid transmission rate through a specific thickness of the sample material. The submitted patent proposal encompasses alternative versions and modifications of the sample material, container and opening ports combination which are in the spirit and the scope of the presented versions in Figure 2.

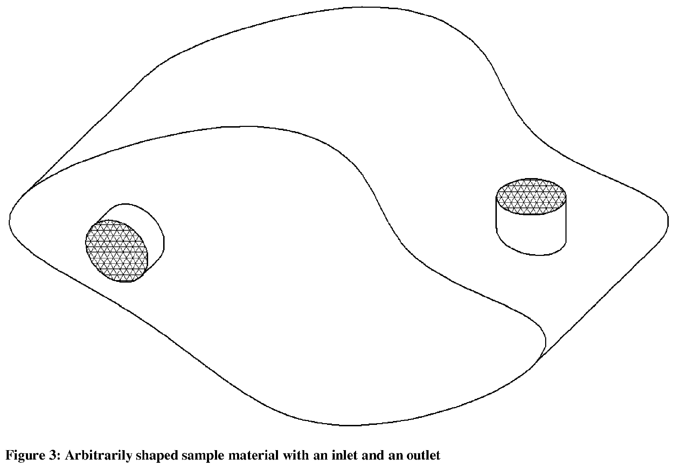

The sample material could also be arbitrarily shaped and not enclosed in any container, if the outer layer of the material is impermeable, as it is presented in Figure 3. All the versions presented in Figure 2 with variations in ports number, size, position, and length are possible also with arbitrarily shaped materials without containers. Therefore, embodiments of the present invention encompass alternative versions and modifications of the sample material, container and opening ports combination which are in the spirit and the scope of the presented versions in Figures 2 and 3. The multi outlet versions of the container allow an analysis of the differences in permeability between the top and the bottom layer of the sample material. The inlet and outlet ports are interchangeable to measure the permeability in the reversed flow direction.

An illustrative plot of the normalized measured pressure difference across the sample material during an unsteady state measurement is presented with a solid line in Figure 4. The normalized measured pressure in the upstream chamber 6 is also presented in Figure 4 with a dashed line. The time presented on x-axis is also normalized to assure a characteristic unsteady state measurement is seen in Figure 4. The analysis of the experimental results can include all of the measured signals: flow meters 18-19, pressure sensors 20-23, temperature sensors 24-27 and the signals from the control valves 11-14 and vents 16-17, if required. The measured quantities included in the analysis must assure a proper permeability determination is possible. In specific operating and boundary conditions some of the measured signals are insignificant and can be omitted from final analysis. The most important and influential measured quantity are the pressure difference between the inlet and the outlet of the sample material in the manometric mode of operation. Similarly, the most important quantities are the volumetric or mass flows measured with the flow meters 18-19 in the volumetric mode of operation.

The comparison of the unsteady state normalized pressure difference measured at the same boundary and initial experimental conditions with a specific amount of the working fluid permeating through three materials with different permeabilities is presented in Figure 5. The comparative analysis can include: (i) the integral area under the entire pressure difference response; (ii) the integral area under a portion of the pressure difference response; (iii) the maximum pressure difference achieved; (iv) the gradient of the pressure difference during the increasing pressure difference; (v) the gradient of the pressure difference during the decreasing pressure difference; (vi) the combination of the before mentioned characteristic values.

The comparison of the steady state normalized pressure difference measured at the same experimental initial and boundary conditions with a continuous fluid flow across three materials with different permeabilities is presented in Figure 6. The comparative analysis can include: (i) the integral area under the entire pressure difference response; (ii) the integral area under a portion of the pressure difference response; (iii) the maximum pressure difference achieved; (iv) the gradient of the pressure difference during the increasing pressure difference; (v) the pressure difference after the steady state operation is achieved; (vi) the combination of the before mentioned characteristic values.

## Claims

1.    A method of measuring the permeability of a sample material comprising:

providing a working fluid, such as a liquid, gas or vapor, in a supply chamber (4);
providing a sample material (28) with an arbitrary shape and size and known dimensions and two additional reference materials with the same dimensions as the sample material and each with a known permeability, wherein the permeability of one reference material is higher and the permeability of the other reference material is lower than the permeability of the sample material (28), wherein each of the sample material (28) and the two additional reference materials are provided with an impermeable surface and an inlet port and an outlet port such that each of the sample material (28) and the two additional reference materials forms a container of which the inlet port is fluidly connectable to the supply chamber (4);
the method further comprising:

(a) filling an upstream chamber (6) with a known amount of the working fluid from the supply chamber (4), wherein the upstream chamber (6) is in fluid connection with both: (i) the supply chamber (4), and (ii) an inlet of an inlet chamber (7), wherein an outlet of the inlet chamber (7) is in fluid connection with the inlet port of the sample material (28) and wherein the outlet port of the sample material (28) is in fluid connection with the inlet of an outlet chamber (8); wherein a pressure sensor (22) is provided for the inlet chamber (7) and a pressure sensor (23) is provided for the outlet chamber (8);
(b) after the upstream chamber (6) is filled with the known amount of working fluid, closing a valve between the supply chamber (4) and the upstream chamber (6) and opening a valve between the upstream chamber (6) and the inlet chamber (7) to induce a pressure difference across the sample material (28);
(c) measuring a transient pressure difference over time between the inlet chamber (7) and the outlet chamber (8) using the two pressure sensors (22, 23) and determining a normalized pressure difference over time from the measured pressure difference;

repeating steps (a) to (c) to determine the normalized pressure difference over time using the first reference material and in a further repetition of steps (a) to (c) the second reference material instead of the sample material (28);
determining the permeability of the sample material (28) by linear interpolation using the known permeabilities of both reference materials and the normalized pressure differences over time determined for the sample material and the first and second reference materials.

2. The method in accordance with claim 1,
wherein the upstream chamber (6) in fluid connection with the sample material (28) is adjustable in size.

3. The method in accordance with any one of the preceding claims,
wherein additional samples are connected fluidly in parallel or in series.

4. The method in accordance with any one of the preceding claims,
wherein the sample material is brittle and/or non-extractable.

**Patentansprüche**

1. Verfahren zum Messen der Permeabilität eines Probenmaterials, umfassend:

Bereitstellen eines Arbeitsfluids, wie etwa einer Flüssigkeit, eines Gases oder eines Dampfes, in einer Versorgungskammer (4); Versehen eines Probenmaterials (28) mit einer willkürlichen Form und Größe und bekannten Abmessungen und von zwei zusätzlichen Referenzmaterialien mit den gleichen Abmessungen wie das Probenmaterial und jeweils mit einer bekannten Permeabilität, wobei die Permeabilität eines Referenzmaterials höher und die Permeabilität des anderen Referenzmaterials geringer als die Permeabilität des Probenmaterials (28) ist, wobei jedes von dem Probenmaterial (28) und den zwei zusätzlichen Referenzmaterialien mit einer undurchlässigen Oberfläche und einem Einlassanschluss und einem Auslassanschluss versehen ist, sodass jedes von dem Probenmaterial (28) und den zwei zusätzlichen Referenzmaterialien einen Behälter bildet, dessen Einlassanschluss fluidisch mit der Versorgungskammer (4) verbindbar ist;
wobei das Verfahren ferner Folgendes umfasst:

(a) Füllen einer vorgelagerten Kammer (6) mit einer bekannten Menge des Arbeitsfluids aus der Versorgungskammer (4), wobei die vorgelagerte Kammer (6) in Fluidverbindung sowohl mit (i) der Versorgungskammer (4) als auch (ii) einem Einlass einer Einlasskammer (7) steht, wobei ein Auslass der Einlasskammer (7) in Fluidverbindung mit dem Einlassanschluss des Probenmaterials (28) steht und wobei der Auslassanschluss des Probenmaterials (28) in Fluidverbindung mit dem Einlass einer Auslasskammer (8) steht; wobei ein Drucksensor (22) für die Einlasskammer (7) bereitgestellt ist und ein Drucksensor (23) für die Auslasskammer (8) bereitgestellt ist;
(b) nachdem die vorgelagerte Kammer (6) mit der bekannten Menge an Arbeitsfluid gefüllt wurde, Schließen eines Ventils zwischen der Versorgungskammer (4) und der vorgelagerten Kammer (6) und Öffnen eines Ventils zwischen der vorgelagerten Kammer (6) und der Einlasskammer (7), um eine Druckdifferenz über das Probenmaterial (28) hinweg zu veranlassen;

(c) Messen einer vorübergehenden Druckdifferenz im Zeitverlauf zwischen der Einlasskammer (7) und der Auslasskammer (8) unter Verwendung der zwei Drucksensoren (22, 23) und Bestimmen einer normalisierten Druckdifferenz im Zeitverlauf anhand der gemessenen Druckdifferenz;

Wiederholen der Schritte (a) bis (c), um die normalisierte Druckdifferenz im Zeitverlauf unter Verwendung des ersten Referenzmaterials und bei einer weiteren Wiederholung der Schritte (a) bis (c) des zweiten Referenzmaterials anstelle des Probenmaterials (28) zu bestimmen;

Bestimmen der Permeabilität des Probenmaterials (28) durch lineare Interpolation unter Verwendung der bekannten Permeabilitäten beider Referenzmaterialien und der normalisierten Druckdifferenzen im Zeitverlauf, die für das Probenmaterial und das erste und das zweite Referenzmaterial bestimmt wurden.

2. Verfahren nach Anspruch 1,
wobei die vorgelagerte Kammer (6) in Fluidverbindung mit dem Probenmaterial (28) hinsichtlich der Größe einstellbar ist.

3. Verfahren nach einem der vorhergehenden Ansprüche,
wobei zusätzliche Proben fluidisch parallel oder in Reihe verbunden sind.

4. Verfahren nach einem der vorhergehenden Ansprüche,
wobei das Probenmaterial spröde und/oder nicht extrahierbar ist.

**Revendications**

1. Procédé de mesure de la perméabilité d'un matériau échantillon comprenant :

la fourniture d'un fluide de travail, tel qu'un liquide, un gaz ou une vapeur, dans une chambre d'alimentation (4) ;
la fourniture d'un matériau échantillon (28) de forme et de taille arbitraires et de dimensions connues et de deux matériaux de référence supplémentaires ayant les mêmes dimensions que le matériau échantillon et présentant chacun une perméabilité connue, dans lequel la perméabilité d'un matériau de référence est plus élevée et la perméabilité de l'autre matériau de référence est plus faible que la perméabilité du matériau échantillon (28), dans lequel chacun parmi le matériau échantillon (28) et les deux matériaux de référence supplémentaires est pourvu d'une surface imperméable, d'un orifice d'entrée et d'un orifice de sortie, de sorte que chacun parmi le matériau échantillon (28) et les deux matériaux de référence supplémentaires forme un conteneur dont l'orifice d'entrée est relié de manière fluide à la chambre d'alimentation (4) ;
le procédé comprend en outre :

(a) le remplissage d'une chambre amont (6) avec une quantité connue de fluide de travail provenant de la chambre d'alimentation (4), dans lequel la chambre amont (6) est en communication fluidique avec à la fois :

(i) la chambre d'alimentation (4) et (ii) une entrée d'une chambre d'entrée (7), dans lequel une sortie de la chambre d'entrée (7) est en communication fluidique avec l'orifice d'entrée du matériau échantillon (28) et dans lequel l'orifice de sortie du matériau échantillon (28) est en communication fluidique avec l'entrée d'une chambre de sortie (8) ; dans lequel un capteur de pression (22) est prévu pour la chambre d'entrée (7) et un capteur de pression (23) est prévu pour la chambre de sortie (8).

(b) une fois la chambre amont (6) remplie avec la quantité connue de fluide de travail, la fermeture d'une vanne entre la chambre d'alimentation (4) et la chambre amont (6) et l'ouverture d'une vanne entre la chambre amont (6) et la chambre d'entrée (7) afin d'induire une différence de pression à travers le matériau échantillon (28) ;
(c) la mesure d'une différence de pression transitoire au cours du temps entre la chambre d'entrée (7) et la chambre de sortie (8) à l'aide des deux capteurs de pression (22, 23) et la détermination d'une différence de pression normalisée au cours du temps à partir de la différence de pression mesurée ; la répétition des étapes (a) à (c) pour déterminer la différence de pression normalisée au cours du temps en utilisant le premier matériau de référence et, lors d'une nouvelle répétition des étapes (a) à (c), en utilisant le second matériau de référence au lieu du matériau échantillon (28) ;

la détermination de la perméabilité du matériau échantillon (28) par interpolation linéaire en utilisant des perméabilités connues des deux matériaux de référence et des différences de pression normalisées au cours du temps déterminées pour le matériau échantillon et les premier et second matériaux de référence.

2. Procédé selon la revendication 1,
dans lequel la chambre amont (6) en communication fluidique avec le matériau échantillon (28) est de taille ajustable.

3. Procédé selon l'une quelconque des revendications précédentes,
dans lequel des échantillons supplémentaires sont en communication fluidique en parallèle ou en série.

4. Procédé selon l'une quelconque des revendications précédentes,
dans lequel le matériau échantillon est cassant et/ou non extractible.

Figure 1: Schematic diagram of the experimental apparatus

Figure 2: Sample material in a confined container and alterations of the container

Figure 3: Arbitrarily shaped sample material with an inlet and an outlet

Figure 4: A characteristic pressure difference and upstream pressure measurement

Figure 5: Unsteady state pressure difference measurements of materials with different permeabilities during flow of a limited amount of the fluid

Figure 6: Stabilization of the pressure difference measurements of materials with different permeabilities during a steady state flow of the working fluid

**EP 4 031 850 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4627270 A
- US 5261267 A
- US 5844136 A
- US 9291541 A
- US 10302543 A
- US 3505856 A
- US 5591898 A
- US 7685865 B
- US 8117899 B